# EUROPEAN PATENT SPECIFICATION

(11) **EP 3 822 510 B1**
(45) Date of publication and mention of the grant of the patent: **07.09.2022**
(21) Application number: 19848170.7
(22) Date of filing: 11.07.2019
(51) Int. Cl.: F16G 1/08, F16G 5/06, F16G 5/20

(54) **FRICTION TRANSMISSION BELT**
REIBUNGSÜBERTRAGUNGSBAND
COURROIE DE TRANSMISSION À FRICTION

(30) Priority: 08.08.2018 JP 2018149567
(43) Date of publication of application: 19.05.2021
(73) Proprietor: Bando Chemical Industries, Ltd., Kobe-shi, Hyogo 650-0047 (JP)
(72) Inventor: KIMURA, Masaki, Kobe-shi, Hyogo 650-0047 (JP); OKUBO, Takayuki, Kobe-shi, Hyogo 650-0047 (JP)
(74) Representative: Germain Maureau
(86) International application number: PCT/JP2019/027440
(87) International publication number: WO 2020/031607

(56) References cited:
- WO-A1-2016/017765
- JP-A- 2006 153 059
- JP-B2- 4 125 341
- JP-B2- 4 951 574
- JP-B2- 6 145 170
- JP-B2- 6 161 711

## Description

### TECHNICAL FIELD

The present invention relates to a friction transmission belt.

### BACKGROUND ART

A known friction transmission, as for example shown in JP2006153059, is made of a rubber composition obtained by dispersing short fibers in an ethylene propylene diene monomer (EPDM) as a rubber component. For example, each of Patent Documents 1 and 2 discloses a V-ribbed belt including a compressed rubber layer and an adhesive rubber layer, each made of a rubber composition obtained by dispersing nylon short fibers and cotton short fibers in an EPDM as a rubber component.

### CITATION LIST

### PATENT DOCUMENTS

PATENT DOCUMENT 1: Japanese Unexamined Patent Publication No. 2013-127278
PATENT DOCUMENT 2: Japanese Unexamined Patent Publication No. 2014-9749

### SUMMARY OF THE INVENTION

The present invention is directed to a friction transmission belt with a power transmission face made or a rubber composition according to claim 1.

### BRIEF DESCRIPTION OF THE DRAWINGS

[FIG. 1] FIG. 1 is a perspective view of a piece of a cogged V-belt according to an embodiment.
[FIG. 2] FIG. 2 is a cross-sectional view of the cogged V-belt according to the embodiment in a belt width direction.
[FIG. 3] FIG. 3 is a cross-sectional view of the cogged V-belt according to the embodiment in the belt length direction.
[FIG. 4A] FIG. 4A is a first illustration showing how to obtain a tensile yield stress.
[FIG. 4B] FIG. 4B is a second illustration showing how to obtain the tensile yield stress.
[FIG. 5] FIG. 5 shows a layout of pulleys of a belt running tester.

### DESCRIPTION OF EMBODIMENT

An embodiment will be described in detail below.

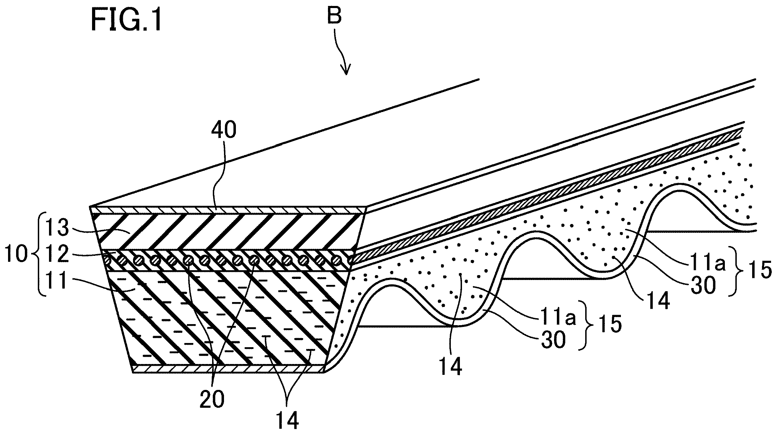

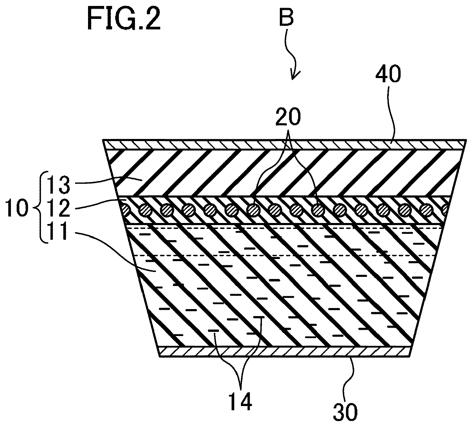

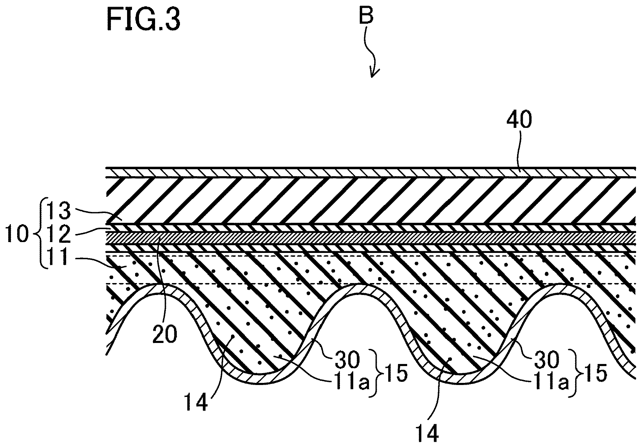

FIGS. 1 to 3 show a cogged V-belt B according to an embodiment. The cogged V-belt B according to the embodiment is, for example, an endless friction transmission belt made of rubber used as a power transmission member for transmission in a twowheeled vehicle. The cogged V-belt B according to the embodiment has a length ranging from 500 mm to 1200 mm, a maxim width ranging from 16 mm to 30 mm, and a maximum thickness ranging from 8.0 mm to 12.0 mm, for example.

The cogged V-belt B according to the embodiment includes a V-belt body 10, a cord 20, an inner reinforcing fabric 30, and an outer reinforcing fabric 40.

The V-belt body 10 is in the shape of an isosceles trapezoid in a cross section in a belt width direction. The angle between both side surfaces of the V-belt body 10 ranges from 24° to 36°, for example. The V-belt body 10 includes a compressed rubber layer 11 on the inner periphery, an adhesive rubber layer 12 in an intermediate region, and a stretch rubber layer 13 on the outer periphery. The compressed rubber layer 11 includes portions 11a to be lower cogs at a constant pitch on its inner periphery. The portions 11a are in the shape of a sine curve in a cross section in the belt length direction.

The compressed rubber layer 11 is made of a rubber composition containing a cross-linked rubber component obtained by heating and pressurizing an uncross-linked rubber composition. The uncross-linked rubber composition is obtained by blending various rubber compound ingredients into a rubber component and kneading the blend. The compressed rubber layer 11 has two side surfaces serving as power transmission faces made of a rubber composition.

The rubber composition forming the compressed rubber layer 11 contains a rubber component containing, as a main component, an EPDM with a diene content of 6.0% by mass or more. The EPDM content of the rubber component is 50% by mass or more, but is suitably 80% by mass or more, more suitably 90% by mass or more, and still more suitably 100% by mass so that the power transmission faces exhibit a high wear resistance, as will be described later. The rubber component may contain ethylene-α-olefin elastomer other than EPDM, chloroprene rubber (CR), chlorosulfonated polyethylene rubber (CSM), and hydrogenated acrylonitrile rubber (H-NBR), for example.

In the rubber component of the rubber composition forming the compressed rubber layer 11, the ethylene content of the EPDM is suitably 45% by mass to 60% by mass and more suitably 50% by mass to 55% by mass so that the power transmission faces exhibit a high wear resistance. Note that if the rubber component contains a plurality of EPDMs, the ethylene content is calculated on average.

Examples of a diene component of the EPDM in the rubber component of the rubber composition forming the compressed rubber layer 11 include ethylidene norbornene (ENB), dicyclopentadiene, and 1,4-hexadiene. Among these, ethylidene norbornene is selected in one suitable embodiment so that the power transmission faces exhibit a high wear resistance. The diene content of the EPDM ranges from 6.5% by mass to 12% by mass and more suitably from 7.0% by mass to 8.0% by mass so that the power transmission faces exhibit a high wear resistance. Note that if the rubber component contains a plurality of EPDMs, the diene content is calculated on average.

In the rubber component of the rubber composition forming the compressed rubber layer 11, the EPDM has a Mooney viscosity of suitably 15 ML₁₊₄ (at 125°C) to 40 ML₁₊₄ (at 125°C), more suitably 15 ML₁₊₄ (at 125°C) to 30 ML₁₊₄ (at 125°C), and still more suitably 25 ML₁₊₄ (at 125°C) to 30 ML₁₊₄ (at 125°C) at 125°C so that the power transmission faces exhibit a high wear resistance. The Mooney viscosity is measured based on JIS K6300.

The rubber composition forming the compressed rubber layer 11 contains short fibers 14 dispersed in the rubber component so as to be oriented in the belt width direction.

Examples of the short fibers 14 include para-aramid short fibers (e.g., polyparaphenylene terephthalamide short fibers and copolyparaphenylene-3,4'oxydiphenylene terephthalamide short fibers), meta-aramid short fibers, nylon 66 short fibers, polyester short fibers, ultra-high molecular weight polyolefin short fibers, polyparaphenylene benzobisoxazole short fibers, polyarylate short fibers, cotton, glass short fibers, and carbon short fibers. The short fibers 14 include one or more kinds of these substances in one suitable embodiment. The short fibers 14 contain at least one of para-aramid short fibers or nylon 66 short fibers in one more suitable embodiment, and contain copolyparaphenylene-3,4'-oxydiphenylene terephthalamide short fibers that are para-aramid short fibers in one still more suitable embodiment so that the power transmission faces exhibit a high wear resistance. The short fibers 14 may or may not be subjected to an adhesion treatment. Examples of the adhesion treatment are as follows. Long uncut fibers are immersed in a base treatment agent containing an epoxy compound or an isocyanate compound and then heated, and/or immersed in an RFL aqueous solution and then heated.

The content of the short fibers 14 in the rubber composition is suitably 10 parts by mass to 30 parts by mass, and more suitably 15 parts by mass to 25 parts by mass with respect to 100 parts by mass of the rubber component so that the power transmission faces exhibit a high wear resistance. If the short fibers 14 contain both of para-aramid short fibers and nylon 66 short fibers, the content of the para-aramid short fibers in the rubber composition is smaller than the content of the nylon 66 short fibers in one suitable embodiment. The content of the para-aramid short fibers in the rubber composition is suitably 1 part by mass to 10 parts by mass, and more suitably 4 parts by mass to 7 parts by mass with respect to 100 parts by mass of the rubber component. The content of the nylon 66 short fibers in the rubber composition is suitably 15 parts by mass to 25 parts by mass, and more suitably 18 parts by mass to 22 parts by mass with respect to 100 parts by mass of the rubber component.

The short fibers 14 have a length of suitably from 1.0 mm to 5.0 mm and more suitably 2.0 mm to 4.0 mm so that the power transmission faces exhibit a high wear resistance. The short fibers 14 have a diameter of suitably from 5.0 µm to 30.0 µm and more suitably of 10.0 µm to 20.0 µm so that the power transmission faces exhibit a high wear resistance. The short fibers 14 have an aspect ratio (i.e., a ratio of the length to the diameter) in the range from 100 to 300 so that the power transmission faces exhibit a high wear resistance.

In the rubber composition forming the compressed rubber layer 11, an organic peroxide is used to cross-link the rubber component in one suitable embodiment so that the power transmission faces exhibit a high wear resistance. Examples of the organic peroxide include dicumyl peroxide, 1,3-bis(t-butylperoxyisopropyl)benzene, and 2,5-dimethyl-2,5-di(t-butylperoxy)hexane. The organic peroxide include one or more kinds of these substances. In this case, the organic peroxide is blended in an uncross-linked rubber composition that is the rubber composition before being cross-linked. One part by mass to 8 parts by mass of the organic peroxide is blended with respect to 100 parts by mass of the rubber component. In the rubber composition forming the compressed rubber layer 11, sulfur may be used to cross-link the rubber component, or an organic peroxide and sulfur may be used together to cross-link the rubber component.

Assume that the rubber component is cross-linked by an organic peroxide in the rubber composition forming the compressed rubber layer 11. In this case, the rubber component of the rubber composition may also be cross-linked by a co-cross-linking agent so that the power transmission faces exhibit a high wear resistance. Examples of such the co-crosslinking agent include trimethylolpropane trimethacrylate, N,N'-m-phenylene bismaleimide, zinc methacrylate, triallyl isocyanurate, ethylene glycol dimethacrylate, and liquid polybutadiene. The co-crosslinking agent includes one or more kinds of these substances. A co-cross-linking agent is blended in an uncross-linked rubber composition that is the rubber composition before being cross-linked. Five parts by mass to 50 parts by mass of the co-cross-linking agent is blended with respect to 100 parts by mass of the rubber component.

The co-cross-linking agent contains N,N'-m-phenylene bismaleimide in one suitable embodiment in view of increasing the adhesiveness with the short fibers so that the power transmission faces exhibit a high wear resistance. In the uncross-linked rubber composition that is the rubber composition before being cross-linked, 3 parts by mass to 10 parts by mass of N,N'-m-phenylene bismaleimide is blended as the co-cross-linking agent with respect to 100 parts by mass of the rubber component in one suitable embodiment.

In view of increasing the elastic modulus, the co-crosslinking agent contains zinc methacrylate in one suitable embodiment. In the uncross-linked rubber composition that is the rubber composition before being cross-linked, 5 parts by mass to 10 parts by mass of zinc methacrylate is blended as the co-cross-linking agent with respect to 100 parts by mass of the rubber component in one suitable embodiment.

The co-crosslinking agent contains both of N,N'-m-phenylene bismaleimide and zinc methacrylate in one suitable embodiment. If N,N'-m-phenylene bismaleimide and zinc methacrylate are used together in the uncross-linked rubber composition that is the rubber composition before being cross-linked, the N,N'-m-phenylene bismaleimide is blended at a smaller amount than the zinc methacrylate in one suitable embodiment. The N,N'-m-phenylene bismaleimide is blended at 3 parts by mass to 7 parts by mass with respect to 100 parts by mass of the rubber component in one suitable embodiment. The zinc methacrylate is blended at 10 parts by mass to 50 parts by mass with respect to 100 parts by mass of the rubber component in one suitable embodiment.

The rubber composition forming the compressed rubber layer 11 may contain, as other rubber compound ingredients, a vulcanization accelerator aid, a processing aid, an antioxidant, a reinforcing material such as carbon black, and plasticizer, for example.

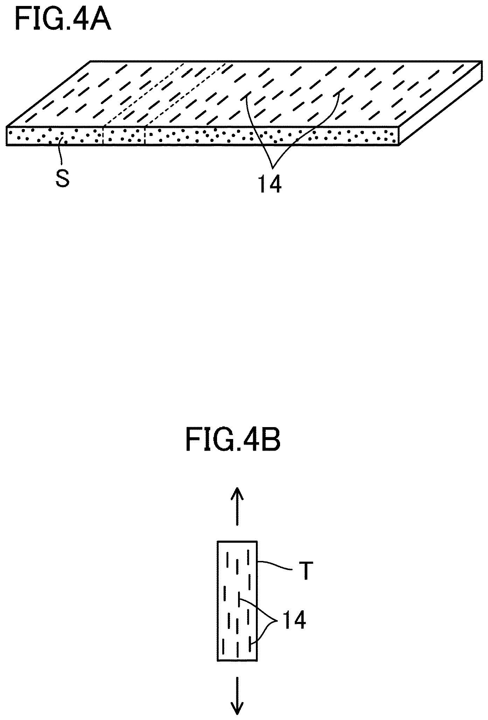

The rubber composition forming the compressed rubber layer 11 has a tensile yield stress of 15.0 MPa or more at 25°C in the belt width direction. The tensile yield stress ranges, however, suitably from 18.0 MPa to 40.0 MPa and more suitably from 20.0 MPa to 35.0 MPa so that the power transmission faces exhibit a high wear resistance. The tensile yield stress according to the present invention is obtained as follows. First, from a region of the compressed rubber layer 11 which is shown in the dotted lines in FIGS. 1B and 1C, and which is closer to the outer periphery than portions corresponding to the bottoms of the portions 11a to be the lower cogs, a strip-like rubber sheet S (e.g., with a width of about 17 mm) extending in the belt length direction as shown in FIG. 4A, that is, in the cross-grain direction is cut out. Next, from this strip-like rubber sheet S, as shown in the broken lines in FIG. 4A, a strip-like test piece T (e.g., with a width of 7 mm) that extends in the belt width direction, that is, in the grain direction is cut out. Using this test piece T, tensile tests are performed under an ambient temperature of 25°C in the length direction as shown in FIG. 4B at a rate of 500 mm/min. From an obtained stressstrain curve, the tensile yield stress is obtained under JISK7161-1:2014.

Each of the adhesive rubber layer 12 and the stretch rubber layer 13 is also made of a rubber composition containing a cross-linked rubber component obtained by heating and pressurizing an uncross-linked rubber composition. The uncross-linked rubber composition is obtained by blending various rubber compound ingredients into a rubber component and kneading the blend. The rubber compositions of the adhesive rubber layer 12 and the stretch rubber layer 13 may be the same or different from that of the compressed rubber layer 11.

The cord 20 is embedded in a middle portion in the thickness direction of the adhesive rubber layer 12 of the V-belt body 10 such that the cord 20 forms a helical pattern at a pitch in the belt width direction. The cord 20 is made of twisted yarn, for example. Examples of the fiber material forming the cord 20 include polyester fibers and aramid fibers. The cord 20 has an outer diameter ranging from 0.7 mm to 1.3 mm, for example. In one suitable embodiment, in order to be adhesive to the adhesive rubber layer 12, the cord 20 is subjected to, before a molding process, one or more of an adhesion treatment of being immersed in a base treatment agent containing an epoxy compound or an isocyanate compound and then heated, an adhesion treatment of being immersed in an RFL aqueous solution and then heated, and/or an adhesion treatment of being immersed in rubber cement and then dried.

The inner reinforcing fabric 30 covers the inner peripheral surface of the compressed rubber layer 11 of the V-belt body 10. The inner reinforcing fabric 30 is a woven fabric, a knitted fabric, or an unwoven fabric, for example. Examples of the fiber material forming the inner reinforcing fabric 30 include nylon fibers, polyester fibers, cotton, and aramid fibers. The inner reinforcing fabric 30 has a thickness ranging from 0.1 mm to 1.0 mm, for example. In one suitable embodiment, in order to be adhesive to the compressed rubber layer 11, the inner reinforcing fabric 30 is subjected to, before a molding process, one or more of an adhesion treatment of being immersed in a base treatment agent containing an epoxy compound or an isocyanate compound and then heated, an adhesion treatment of being immersed in an RFL aqueous solution and then heated, an adhesion treatment of being immersed in rubber cement and then dried, and/or an adhesion treatment of being coated with high-viscosity rubber cement dried on the surface of the inner reinforcing fabric 30 on the V-belt body 10. The portions 11a of the compressed rubber layer 11 are covered with the inner reinforcing fabric 30 so as to be lower cogs 15. Each lower cog 15 has, for example, a height ranging from 3.4 mm to 5.0 mm, and a width ranging from 3.0 mm to 6.0 mm. The lower cogs 15 are arranged at a pitch ranging from 7.0 mm to 11.0 mm.

The outer reinforcing fabric 40 covers the outer peripheral surface of the compressed rubber layer 13 of the V-belt body 10. The outer reinforcing fabric 40 is a woven fabric, a knitted fabric, or an unwoven fabric, for example. Examples of the fiber material forming the outer reinforcing fabric 40 include nylon fibers, polyester fibers, cotton, and aramid fibers. The outer reinforcing fabric 40 has a thickness ranging from 0.1 mm to 1.0 mm, for example. In one suitable embodiment, in order to be adhesive to the stretch rubber layer 13, the outer reinforcing fabric 40 is subj ected to, before a molding process, one or more of an adhesion treatment of being immersed in a base treatment agent containing an epoxy compound or an isocyanate compound and then heated, an adhesion treatment of being immersed in an RFL aqueous solution and then heated, an adhesion treatment of being immersed in rubber cement and then dried, and/or an adhesion treatment of being coated with high-viscosity rubber cement and dried on the surface of the outer reinforcing fabric 40 on the V-belt body 10.

The cogged V-belt B according to the embodiment described above may be manufactured by a known method.

While the cogged V-belt B with only the lower cogs 15 has been described above in the embodiment, the present disclosure is not particularly limited thereto. Any friction transmission belt is applicable as long as having power transmission faces made of a rubber composition. Examples include a double-cogged V-belt, a raw edge V-belt without cogs, a V-ribbed belt, or a flat belt.

### [Example]

### (Cogged V-Belt)

Cogged V-belts according to the following Examples 1 to 5 and Comparative Examples 1 to 4 were prepared. Table 1 shows rubber blends used in the Examples and Comparative Examples.

### <Example 1>

An EPDM-1 (T7241 manufactured by JSR Corporation, with an ethylene content of 52% by mass, an ENB content of 7.7% by mass, and a Mooney viscosity of 27 ML₁₊₄ (at 125°C)) was, as a rubber component, put into a chamber of an internal Banbury mixer and masticated therein. Next, with respect to 100 parts by mass of this rubber component, 5 parts by mass of zinc oxide (Zinc Oxide Type 3 manufactured by SAKAI CHEMICAL INDUSTRY CO., LTD.) as a vulcanization accelerator aid, 1 part by mass of stearic acid (LUNAC manufactured by Kao Corporation) as a processing aid, 50 parts by mass of FEF carbon black (SEAST SO manufactured by Tokai Carbon Co., Ltd.) as a reinforcing material, 5 parts by mass of oil (SUN PAR 2280 manufactured by JAPAN SUN OIL COMPANY, LTD.) as a plasticizer, N,N'-m-phenylene bismaleimide (VULNOC PM manufactured by OUCHI SHINKO CHEMICAL INDUSTRIAL CO., LTD.) as a co-cross-linking agent, 7.4 parts by mass (2.96 parts by mass of the active ingredient) of an organic peroxide (PERHEXA 25B-40 manufactured by NOF CORPORATION with a purity of 40% by mass) as a cross-linking agent, and 22.5 parts by mass of polyparaphenylene terephthalamide short fibers (Kevlar manufactured by Du Pont with a length of 3.5 mm, a diameter of 12.0 µm, and an aspect ratio of 292) that are para-aramid short fibers as short fibers were put into the chamber, blended, and kneaded. A cogged V-belt including a compressed rubber layer made of a resultant uncross-linked rubber composition was prepared as Example 1. In the cogged V-belt according to Example 1, the rubber composition forming the compressed rubber layer has a tensile yield stress of 22.8 MPa at 25°C in the belt width direction.

The adhesive rubber layer and the stretch rubber layer were made of different EPDM rubber compositions. The cord was made of twist yarn of polyethylene fibers. The inner and outer reinforcing fabrics were made of woven fabric of nylon 66 fibers.

The cogged V-belt according to Example 1 had a length of 717.5 mm (at the center of the cord), a maximum outer peripheral width of 19.4 mm, a minimum inner peripheral width of 14.7 mm, and a maximum thickness of 9.5 mm (2.0 mm on an outer side of the center of the cord and 7.5 mm on an inner side). The angle between both side surfaces was 30°. The adhesive rubber layer had a thickness of 1.5 mm. The cord had an outer diameter of 1.0 mm. The cord has a pitch of 1.15 mm in the width direction. The inner and outer reinforcing fabrics had a thickness of 0.66 mm. The lower cogs had a height of 4.1 mm, were aligned at a pitch of 7.5 mm, and had a curvature of 2.2 mm at the tops and of 1.0 mm at the bottoms.

### <Example 2>

In the rubber composition forming the compressed rubber layer, a cogged V-belt of Example 2 was produced with the same configuration as Example 1 except that, with respect to 100 parts by mass of a rubber component, 22 parts by mass of copolyparaphenylene-3,4'-oxydiphenylene terephthalamide short fibers (Technora manufactured by TEIJIN LIMITED with a length of 3.0 mm, a diameter of 12.5 µm, and an aspect ratio of 240) that are para-aramid short fibers were blended as short fibers. In the cogged V-belt according to Example 2, the rubber composition forming the compressed rubber layer had a tensile yield stress of 30.3 MPa at 25°C in the belt width direction.

### <Example 3>

In the rubber composition forming the compressed rubber layer, a cogged V-belt of Example 3 was produced with the same configuration as Example 1 except that, with respect to 100 parts by mass of a rubber component, 22 parts by mass of meta-aramid short fibers (Conex manufactured by TEIJIN LIMITED with a length of 3.0 mm, a diameter of 14.2 µm, and an aspect ratio of 211) were blended as short fibers. In the cogged V-belt according to Example 3, the rubber composition forming the compressed rubber layer had a tensile yield stress of 24.2 MPa at 25°C in the belt width direction.

### <Example 4>

In the rubber composition forming the compressed rubber layer, a cogged V-belt of Example 4 was produced with the same configuration as Example 1 except that, with respect to 100 parts by mass of a rubber component, 18 parts by mass of nylon 66 short fibers (LEONA 66 manufactured by Asahi Kasei Corporation with a length of 3.0 mm, a diameter of 27.3 µm, and an aspect ratio of 110) were blended as short fibers. In the cogged V-belt according to Example 4, the rubber composition forming the compressed rubber layer had a tensile yield stress of 24.1 MPa at 25°C in the belt width direction.

### <Example 5>

In the rubber composition forming the compressed rubber layer, a cogged V-belt of Example 5 was produced with the same configuration as Example 1 except that, with respect to 100 parts by mass of a rubber component, 20 parts by mass of zinc methacrylate (ACTOR ZMA manufactured by Kawaguchi Chemical Industry Co., LTD.) was further blended as a co-crosslinking agent, and with respect to 100 parts by mass of a rubber component, 5.8 parts by mass of copolyparaphenylene-3,4'-oxydiphenylene terephthalamide short fibers that are para-aramid short fibers, and 19.1 parts by mass of nylon 66 short fibers were blended as short fibers. In the cogged V-belt according to Example 5, the rubber composition forming the compressed rubber layer had a tensile yield stress of 30.1 MPa at 25°C in the belt width direction.

### <Comparative Example 1>

In the rubber composition forming the compressed rubber layer, a cogged V-belt of Comparative Example 1 was produced with the same configuration as Example 3 except that meta-aramid short fibers with a diameter of 36.4 µm, that is, an aspect ratio of 82 was used. In the cogged V-belt according to Comparative Example 1, the rubber composition forming the compressed rubber layer had a tensile yield stress of 9.2 MPa at 25°C in the belt width direction.

### <Comparative Example 2>

In the rubber composition forming the compressed rubber layer, a cogged V-belt of Comparative Example 2 was produced with the same configuration as Example 4 except that nylon 66 short fibers with a length of 1.0 µm, that is, an aspect ratio of 37 was used. In the cogged V-belt according to Comparative Example 2, the rubber composition forming the compressed rubber layer had a tensile yield stress of 10.7 MPa at 25°C in the belt width direction.

### <Comparative Example 3>

In the rubber composition forming the compressed rubber layer, a cogged V-belt of Comparative Example 3 was produced with the same configuration as Example 3 except that EPDM-2 (EP123 manufactured by JSR Corporation with an ethylene content of 58% by mass, an ENB content of 4.5% by mass, and a Mooney viscosity of 19.5 ML₁₊₄ (at 125°C)) was used as a rubber component, and with respect to 100 parts by mass of a rubber component, 16 parts by mass of meta-aramid short fibers were blended. In the cogged V-belt according to Comparative Example 3, the rubber composition forming the compressed rubber layer had a tensile yield stress of 14.3 MPa at 25°C in the belt width direction.

### <Comparative Example 4>

In the rubber composition forming the compressed rubber layer, a cogged V-belt of Comparative Example 4 was produced with the same configuration as Example 3 except that no N,N'-m-phenylene bismaleimide was blended as a co-cross-linking agent, and with respect to 100 parts by mass of a rubber component, 21 parts by mass of meta-aramid short fibers were blended. In the cogged V-belt according to Comparative Example 4, the rubber composition forming the compressed rubber layer had a tensile yield stress of 14.6 MPa at 25°C in the belt width direction.

**[Table 1]**

| | Example | | | | | Comparative Example | | | |
|---|---|---|---|---|---|---|---|---|---|
| | 1 | 2 | 3 | 4 | 5 | 1 | 2 | 3 | 4 |
| Rubber Component EPDM-1 | 100 | 100 | 100 | 100 | 100 | 100 | 100 | | 100 |
| Rubber Component EPDM-2 | | | | | | | | 100 | |
| Vulcanization Accelerator Aid: Zinc Oxide | 5 | 5 | 5 | 5 | 5 | 5 | 5 | 5 | 5 |
| Processing Aid: Stearic Acid | 1 | 1 | 1 | 1 | 1 | 1 | 1 | 1 | 1 |
| Reinforcing Material: FEF Carbon Black | 50 | 50 | 50 | 50 | 50 | 50 | 50 | 50 | 50 |
| Co-Crosslinking Agent: N,N'-m-Phenylene Bismaleimide | 5 | 5 | 5 | 5 | 5 | 5 | 5 | 5 | |
| Co-Crosslinking Agent: Zinc Methacrylate | | | | | 20 | | | | |
| Cross-Linking Agent: Organic Peroxide (Active Ingredient) | 7.4 (2.9 6) | 7.4 (2.9 6) | 7.4 (2.9 6) | 7.4 (2.9 6) | 7.4 (2.9 6) | 7.4 (2.9 6) | 7.4 (2.9 6) | 7.4 (2.9 6) | 7.4 (2.9 6) |
| Para-Aramid Short Fibers, Kevlar, L/d = 292 | 22.5 | | | | | | | | |
| Para-Aramid Short Fibers, Technora, L/d = 240 | | 22 | | | 5.8 | | | | |
| Meta-Aramid Short Fibers, L/d = 211 | | | 22 | | | | | 16 | 21 |
| Nylon 66 Short Fibers, L/d = 110 | | | | 18 | 19.1 | | | | |
| Meta-Aramid Short Fibers, L/d = 82 | | | | | | 21 | | | |
| Nylon 66 Short Fibers, L/d = 37 | | | | | | | 18 | | |
| Mass Change Rate % | 2.5 | 2.3 | 2.6 | 2.5 | 2.1 | 3.6 | 3.4 | 3.5 | 3.3 |

### (Belt Running Test)

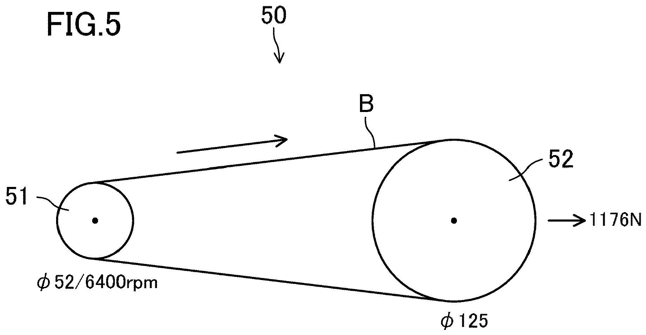

FIG. 5 shows a layout of pulleys of a belt running tester 50.

The belt running tester 50 includes a driving pulley 51 with a diameter of 52 mm, and a driven pulley 52 with a diameter of 125 mm on the right of the driving pulley 51 so as to be transversely movable. The driving pulley 51 and the driven pulley are made of an aluminum alloy (e.g., ADC12), and having an arithmetic average roughness (Ra) of 0.5 mm and a V angle of 28°.

Each of the cogged V-belts B according to Examples 1 to 5 and Comparative Examples 1 to 4 was wrapped around the driving and driven pulleys 51 and 52. After applying an axial load of 1176 N onto a side of the driven pulley 52, the cogged V-belt B was caused to run for 48 hours with the driving pulley 51 rotating at 6400 rpm. A mass change rate of the mass change of the belt before and after the running to the mass of the belt before the running was calculated.

### (Test Results)

The test results are shown in Table 1.

According to Table 1, in each of Examples 1 to 5, the rubber composition serving as the power transmission faces contains a rubber component containing, as a main component, an EPDM with a diene content of 6.0% by mass or more, the short fibers with an aspect ratio of 100 or more are dispersed in the rubber component so as to be oriented in the belt width direction, and the rubber composition has a tensile yield stress of 15.0 MPa or more at 25°C in the belt width direction. In each of Comparative Examples 1 and 2, the short fibers have an aspect ratio lower than 100, and the rubber composition has, at 25°C, a tensile yield stress lower than 15.0 MPa in the belt width direction. In Comparative Example 3, the diene content is lower than 6.0% by mass, and the rubber composition has, at 25°C, a tensile yield stress lower than 15.0 MPa in the belt width direction. Further, in Comparative Example 4, the rubber composition has, at 25°C, a tensile yield stress lower than 15.0 MPa in the belt width direction. Table 1 shows that the mass change rates of the belts before and after running are lower, that is, the power transmission faces have the higher wear resistances in the Examples 1 to 5 than in Comparative Examples 1 to 4.

### INDUSTRIAL APPLICABILITY

The present invention relates to a friction transmission belt.

### DESCRIPTION OF REFERENCE CHARACTERS

- B: Cogged V-Belt (Friction Transmission Belt)
- S: Rubber Sheet
- T: Test Piece
- 10: V-Belt Body
- 11: Compressed Rubber Layer
- 11a: Portion to Be Lower Cog
- 12: Adhesive Rubber Layer
- 13: Stretch Rubber Layer
- 14: Short Fibers
- 15: Lower Cog
- 20: Cord
- 30: Inner Reinforcing Fabric
- 40: Outer Reinforcing Fabric
- 50: Belt Running Tester
- 51: Driving Pulley
- 52: Driven Pulley

## Claims

1. A friction transmission belt that is a V-belt or a V-ribbed belt with a power transmission face made of a rubber composition, **characterized in that**,
the rubber composition contains:
a rubber component containing, as a main component, an EPDM with a diene content in the range from 6.5% by mass to 12% by mass; and
short fibers dispersed in the rubber component so as to be oriented in a belt width direction, and having an aspect ratio in the range from 100 to 300, and
the rubber composition has a tensile yield stress of 15.0 MPa or more at 25°C in the belt width direction.

2. The friction transmission belt of claim 1, wherein
the rubber composition contains 10 parts by mass to 30 parts by mass of the short fibers with respect to 100 parts by mass of the rubber component.

3. The friction transmission belt of claim 1 or 2, wherein
the short fibers include one or more kinds of para-aramid short fibers, meta-aramid short fibers, nylon 66 short fibers, polyester short fibers, ultra-high molecular weight polyolefin short fibers, polyparaphenylene benzobisoxazole short fibers, polyarylate short fibers, cotton, glass short fibers, or carbon short fibers.

4. The friction transmission belt of claim 3, wherein
the short fibers include both of para-aramid short fibers and nylon 66 short fibers, and
in the rubber composition, a content of the para-aramid short fibers is smaller than a content of the nylon 66 short fibers.

5. The power transmission belt of any one of claims 1 to 4, wherein
the short fibers have a length ranging from 0.1 mm to 5.0 mm.

6. The power transmission belt of any one of claims 1 to 5, wherein
the short fibers have a diameter ranging from 5.0 µm to 30.0 µm.

7. The power transmission belt of any one of claims 1 to 6, wherein
an organic peroxide is used in the rubber composition to cross-link the rubber component.

8. The friction transmission belt of claim 7, wherein
a co-cross-linking agent is also used in the rubber composition to cross-link the rubber component.

9. The friction transmission belt of claim 8, wherein
in an uncross-linked rubber composition that is the rubber composition before being cross-linked, 5 parts by mass to 50 parts by mass of the co-cross-linking agent is blended with respect to 100 parts by mass of the rubber component.

10. The friction transmission belt of claim 8 or 9, wherein
the co-crosslinking agent contains at least one of N,N'-m-phenylene bismaleimide or zinc methacrylate.

11. The friction transmission belt of claim 10, wherein
the co-crosslinking agent contains N,N'-m-phenylene bismaleimide and zinc methacrylate, and
the uncross-linked rubber composition that is the rubber composition before being cross-linked contains the N,N'-m-phenylene bismaleimide blended at a smaller amount than the zinc methacrylate.

12. The power transmission belt of any one of claims 1 to 11, wherein
an ethylene content of the EPDM is 45% by mass to 60% by mass.

## Patentansprüche

1. Reibungsübertragungsband, das ein V-Band oder ein V-Keilrippenband mit einer Kraftübertragungsfläche aus einer Gummizusammensetzung ist, **dadurch gekennzeichnet, dass**
die Gummizusammensetzung enthält:
eine Gummikomponente enthaltend, als eine Hauptkomponente, ein EPDM mit einem Diengehalt im Bereich von 6,5 Massen-% bis 12 Massen-%; und
Kurzfasern, die in der Gummikomponente so dispergiert sind, um in einer Bandbreitenrichtung ausgerichtet zu werden, und mit einem Seitenverhältnis im Bereich von 100 bis 300, und
die Gummizusammensetzung eine Zugstreckgrenze von 15,0 MPa oder mehr bei 25 °C in der Bandbreitenrichtung aufweist.

2. Reibungsübertragungsband nach Anspruch 1, wobei
die Gummizusammensetzung 10 Masseteile bis 30 Masseteile der Kurzfasern im Verhältnis zu 100 Masseteilen der Gummizusammensetzung enthält.

3. Reibungsübertragungsband nach Anspruch 1 oder 2, wobei
die Kurzfasern eine oder mehrere Arten von Para-Aramid-Kurzfasern, Meta-Aramid-Kurzfasern, Nylon 66-Kurzfasern, Polyester-Kurzfasern, ultrahochmolekulares Polyolefin-Kurzfasern, Polyparaphenylen-benzobisoxalol-Kurzfasern, Polyarylat-Kurzfasern, Baumwolle, Glas-Kurzfasern oder Kohlenstoff-Kurzfasern enthalten.

4. Reibungsübertragungsband nach Anspruch 3, wobei
die Kurzfasern sowohl Para-Aramid-Kurzfasern als auch Nylon 66-Kurzfasern enthalten,
und
in der Gummizusammensetzung ein Gehalt an Para-Aramid-Kurzfasern kleiner als ein Gehalt an Nylon 66-Kurzfasern ist.

5. Reibungsübertragungsband nach einem der Ansprüche 1 bis 4, wobei die Kurzfasern eine Länge im Bereich von 0,1 mm bis 5,0 mm aufweisen.

6. Reibungsübertragungsband nach einem der Ansprüche 1 bis 5, wobei die Kurzfasern einen Durchmesser im Bereich von 5,0 µm bis 30,0 µm aufweisen.

7. Reibungsübertragungsband nach einem der Ansprüche 1 bis 6, wobei ein organisches Peroxid in der Gummizusammensetzung zum Vernetzen der Gummikomponente verwendet wird.

8. Reibungsübertragungsband nach Anspruch 7, wobei
in der Gummizusammensetzung auch ein Co-Vernetzungsmittel zum Co-Vernetzen der Gummikomponente verwendet wird.

9. Reibungsübertragungsband nach Anspruch 8, wobei
in einer unvernetzten Gummizusammensetzung, die die Gummizusammensetzung vor dem Vernetzen ist, 5 Masseteile bis 50 Masseteile des Co-Vernetzungsmittels im Verhältnis zu 100 Masseteilen der Gummikomponente gemischt werden.

10. Reibungsübertragungsband nach Anspruch 8 oder 9, wobei
das Co-Vernetzungsmittel mindestens eines aus N,N'-m-Phenylenbismaleimid oder Zinkmethacrylat enthält.

11. Reibungsübertragungsband nach Anspruch 10, wobei
das Co-Vernetzungsmittel N,N'-m-Phenylenbismaleimid und Zinkmethacrylat enthält, und
die unvernetzte Gummizusammensetzung, die die Gummizusammensetzung vor dem Vernetzen ist, das N,N'-m-Phenylenbismaleimid enthält, das in einer geringeren Menge als das Zinkmethacrylat gemischt ist.

12. Reibungsübertragungsband nach einem der Ansprüche 1 bis 11, wobei ein Ethylengehalt des EPDM 45 Massen-% bis 60 Massen-% ist.

## Revendications

1. Courroie de transmission à frottement qui est une courroie trapézoïdale ou une courroie striée avec une face de transmission de puissance réalisée en une composition de caoutchouc, **caractérisée en ce que**,
la composition de caoutchouc contient :
un composant caoutchouc contenant, comme composant principal, un EPDM avec une teneur en diène se trouvant dans la plage allant de 6,5% en masse à 12% en masse ; et
des fibres courtes dispersées dans le composant caoutchouc de manière à être orientées dans une direction de la largeur de courroie, et ayant un rapport d'aspect se trouvant dans la plage allant de 100 à 300, et
la composition de caoutchouc a une limite d'élasticité en traction supérieure ou égale à 15,0 MPa à 25°C dans la direction de la largeur de courroie.

2. Courroie de transmission à frottement de la revendication 1, dans laquelle
la composition de caoutchouc contient 10 parties en masse à 30 parties en masse des fibres courtes par rapport à 100 parties en masse du composant caoutchouc.

3. Courroie de transmission à frottement de la revendication 1 ou 2, dans laquelle
les fibres courtes comprennent un ou plusieurs types parmi des fibres courtes para-aramide, des fibres courtes méta-aramide, des fibres courtes de nylon 66, des fibres courtes de polyester, des fibres courtes de polyoléfine de poids moléculaire ultra élevé, des fibres courtes de polyparaphénylène benzobisoxazole, des fibres courtes de polyarylate, le coton, des fibres courtes de verre ou des fibres courtes de carbone.

4. Courroie de transmission à frottement de la revendication 3, dans laquelle
les fibres courtes comprennent à la fois des fibres courtes para-aramide et des fibres courtes de nylon 66, et
dans la composition de caoutchouc, une teneur en fibres courtes para-aramide est inférieure à une teneur en fibres courtes de nylon 66.

5. Courroie de transmission de puissance de l'une quelconque des revendications 1 à 4, dans laquelle
les fibres courtes ont une longueur se trouvant dans une plage allant de 0,1 mm à 5,0 mm.

6. Courroie de transmission de puissance de l'une quelconque des revendications 1 à 5, dans laquelle
les fibres courtes ont un diamètre se trouvant dans une plage allant de 5,0 µm à 30,0 µm.

7. Courroie de transmission de puissance de l'une quelconque des revendications 1 à 6, dans laquelle
un peroxyde organique est utilisé dans la composition de caoutchouc pour réticuler le composant caoutchouc.

8. Courroie de transmission à frottement de la revendication 7, dans laquelle
un agent de co-réticulation est également utilisé dans la composition de caoutchouc pour réticuler le composant caoutchouc.

9. Courroie de transmission à frottement de la revendication 8, dans laquelle
dans une composition de caoutchouc non réticulée qui est la composition de caoutchouc avant réticulation, 5 parties en masse à 50 parties en masse de l'agent de co-réticulation sont mélangées par rapport à 100 parties en masse du composant caoutchouc.

10. Courroie de transmission à frottement de la revendication 8 ou 9, dans laquelle
l'agent de co-réticulation contient au moins l'un parmi le N,N'-m-phénylène bismaléimide ou le méthacrylate de zinc.

11. Courroie de transmission à frottement de la revendication 10, dans laquelle
l'agent de co-réticulation contient du N,N'-m-phénylène bismaléimide et du méthacrylate de zinc, et
la composition de caoutchouc non réticulée qui est la composition de caoutchouc avant réticulation contient du N,N'-m-phénylène bismaléimide mélangé en une plus petite quantité que le méthacrylate de zinc.

12. Courroie de transmission de puissance de l'une quelconque des revendications 1 à 11, dans laquelle
une teneur en éthylène de l'EPDM est comprise entre 45% en masse et 60% en masse.
